# EUROPEAN PATENT SPECIFICATION

(11) **EP 1 546 665 B1**
(45) Date of publication and mention of the grant of the patent: **24.02.2016**
(21) Application number: 03798611.4
(22) Date of filing: 15.08.2003
(51) Int. Cl.: G01F 23/284, H01Q 1/42, H01Q 1/22, H01Q 1/40

(54) **A DEVICE IN A LEVEL GAUGING SYSTEM**
EINRICHTUNG IN EINEM NIVELLIERUNGSSYSTEM
DISPOSITIF DANS UN SYSTEME DE JAUGEAGE DE NIVEAU

(30) Priority: 24.09.2002 SE 0202826; 24.09.2002 US 252830
(43) Date of publication of application: 29.06.2005
(73) Proprietor: Rosemount Tank Radar AB, 402 51 Göteborg (SE)
(72) Inventor: WESTERLING, Jan, S-587 37 Linköping (SE); HAKANSSON, Magnus, S-587 39 Linköping (SE)
(74) Representative: Awapatent AB
(86) International application number: PCT/SE2003/001280
(87) International publication number: WO 2004/029560

(56) References cited:
- GB-A- 2 283 369
- US-A- 4 851 855
- US-A- 5 844 529
- US-A1- 2002 040 596
- US-A1- 2002 126 061

## Description

### FIELD OF THE INVENTION

The present invention relates generally to an antenna using radar waves in a level gauging system and, more particularly, to an antenna comprising a plane surface from which radar waves are transmitted towards a surface of a fluid kept in a container and to which reflected radar waves are received from the fluid surface in order to gauge the fluid level in the container.

### DESCRIPTION OF THE RELATED ART

In level gauging systems using radar waves for gauging the fluid level in a container, such as a tank on a ship or the like, planar antennas are commonly used today since they are fairly cheap to manufacture. These antennas are usually mounted in an opening in the lid of the container and comprise a plane surface facing the surface of the fluid and having means for transmitting/receiving radar waves in order to gauge the fluid level. The plane surface of the antenna forms a horizontal cold wall which causes e.g. water vapour to condensate on the plane surface, especially if the container is a heated tank. Condensed fluid on the antenna surface leads to disturbed propagation of the radar waves and/or absorbed radar waves. Therefore, planar antennas are very sensitive for environments which are strongly condensing.

A radar wave type liquid level gauge is known from JP 10-197617, in which a planar antenna is provided with a conically formed protective board (radome) on which paraffin is condensed through evaporation of stored oil. The board is disposed such that the top of the cone faces the antenna at the shortest distant, i.e. the top of the cone faces the antenna. Due to the conical form of the protective board, the condensate is caused to flow down to the peripheral part of the board. The protective board is a separate unit placed at a certain distance from the antenna and does not form a part of the antenna.

The solution described above deals with the problem of leading condensate away from the antenna. There is, however, a need for a solution which, besides leading the condensate away from the antenna, minimizes the tendency of e.g. water vapour to condensate on the plane surface of the antenna.

Antennas provided with a radome placed at a distance from the antenna leaving a space filled with air between the antenna surface and the radome, may have a problem with the appearance of condensed fluid in that space if, there by any chance occurs a leakage between either the radome and the container or the antenna and the surroundings. For example DE 3 201 104 shows an antenna provided with a radome, where the antenna is upwards directed having an opening between the antenna and the radome at the edge of the radome in order to lead condensed fluid out from the space between the antenna and the radome. There is, however, a need for a solution which is applicable in a level gauging system, where the antenna is directed downwards towards the fluid surface.

US2002/0126061A relates to a horn antenna for a radar-filling level measuring device having an antenna envelope that comprises a flaring hollow space of the antenna, in which a filling is present at least in part filling up said hollow space of the antenna, and having an encasing of a dielectric material and enclosing the outside of the antenna envelope and closing the opening of the hollow space of the hollow space of the antenna.

The present invention is directed to overcoming, or at least reducing the effects of one or more of the problems set forth above.

### SUMMARY OF THE INVENTION

In one aspect of the present invention an antenna is provided, which uses radar waves for measuring the fluid level in a container. The antenna is provided with a radome arranged and formed such that to lead condensate away.

In another aspect of the invention an antenna is provided, which uses radar waves for measuring the fluid level in a container. The antenna is provided with a protecting material having thermally insulating characteristics.

In still another aspect of the invention an antenna is provided, which uses radar waves for measuring the fluid level in a container. The antenna is provided with a radome forming a space between the antenna and the radome. The antenna is further provided with a filling material provided in said space between the antenna and the radome and being tightly fit between the antenna and the radome such, that it prevents condensed fluid to enter the space in case of a leakage between either the radome and the container or the antenna and the surroundings.

In yet another aspect of the invention an antenna is provided, which uses radar waves for measuring the fluid level in a container. The antenna is provided with a radome forming a space between the antenna and the radome, in which space a filling material is provided. The radiation of radar waves from the antenna is optimised in consideration of the radome and the filling material, why the thickness of the radome varies along the length of the radome.

### BRIEF DESCRIPTION OF THE DRAWINGS

The invention may be understood by reference to the following description taken in conjunction with the accompanying drawings, in which same reference numerals are referring to the same detail.
- Fig. 1: is a perspective view of a level gauging system;
- Fig. 2: illustrates a perspective view in cross-section of a preferred embodiment of an antenna according to the present invention;

While the invention is susceptible to various modifications and alternative forms, specific embodiments thereof have been shown by way of example in the drawings and are herein described in detail. It should be understood, however, that in the description herein of specific embodiments is not intended to limit the invention to the particular forms disclosed, but, on the contrary, the intention is to cover all modifications, equivalents, and alternatives falling within the spirit and scope of the invention as defined by the appended claims.

### DETAILED DESCRIPTION OF SPECIFIC EMBODIMENTS

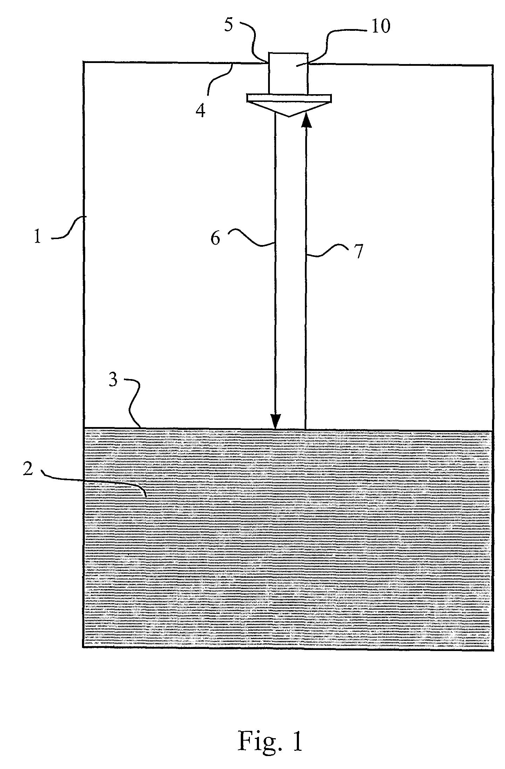

Figure 1 shows a fluid level gauging system using radar waves for measuring the fluid level in a container 1. The container 1 contains a fluid 2 and can e.g. be a tank on a ship, in a process industry or a tank in an oil refinery. The fluid may be a liquid such as oil, a gas or pulverized solid material such as sand or stone powder. The system comprises a planar antenna 10 which is mounted in an opening 5 in a lid 4 of the container 1. The antenna 10 is directed against a fluid surface 3 and arranged to transmit radar waves towards the fluid surface 3, denoted with arrow 6, and to receive reflected radar waves from the fluid surface 3, denoted with arrow 7. The system further comprises a radar unit (not shown) in which the radar waves are generated

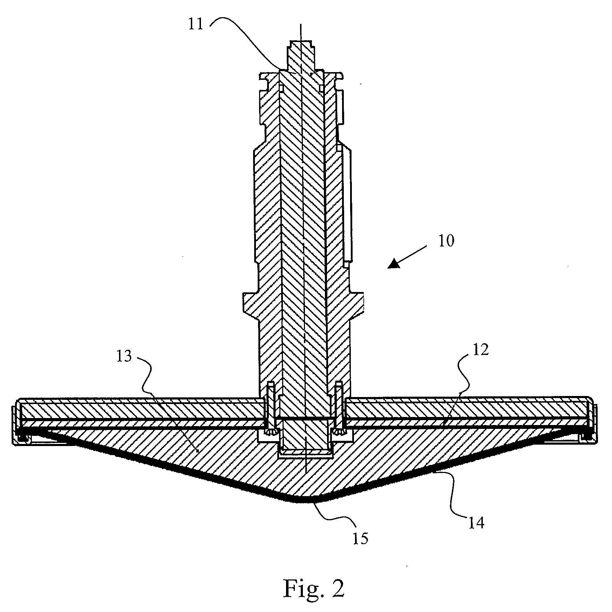

Referring now to figure 2, the antenna 10 comprises a transmission line 11 and a plane surface 12. Planar antennas are well-known in the art and are not described in detail herein, see for example "Microstrip Antenna Design Handbook" by R. Garg, P. Bharita, I Bahl and A. Ittipiboon, Artech House 2001 p. 539-540, which is hereby incorporated as reference. Microstrip antenna is a synonym of planar antenna. The plane surface 12 comprises means for transmitting and receiving radar waves which are fed by the transmission line 11 from the radar unit.

The plane surface 12 is provided with a radome 14 which is, in the preferred embodiment shown in figure 2, formed as a cone with the top of the cone 15 facing the liquid surface 3. The condensate is, therefore, caused by force of gravity to flow along the envelope surface of the cone to the top of the cone 15, where it drips off. This means that the condensate is caused to drip off where it effects the propagation of the radar waves the least.

A distance material 13 having thermally insulating characteristics is arranged in the space between the plane surface 12 and the radome 14. The material is entirely filling this space and thereby making the plane surface 12 and the radome 14 to a mechanically strong integrated unit. The material 13 is a material having good thermally insulating and mechanically good characteristics, but which do not have an effect on the electrical characteristics of the antenna 10, examples of such a material are rohacell^{®} or divinycell^{®}. The appearance of condensed fluid on the radome surface will be reduced when such a material 13 having thermally insulating characteristics is placed between the plane surface 12 and the radome 14. Further, the problem with the appearance of condensed fluid in the space between the plane surface 12 and the radome 14 is eliminated with a device where this space is filled by a material, other than air. Still further, the mechanically strong integrated unit according to the present invention, may easily be mounted in a pressurized container, e.g. a tank containing gas, without having the radome collapsed.

The radome 14 can e.g. be a plastic solid piece or just a film resistant of chemicals which the material 13 is coated with. Usually the radome 14 is anti-statically treated. This is especially important when the antenna needs to be overvoltage protected, e.g. in environments subject to explosion hazards.

The embodiment shown in figure 2 is just one example of how the radome 14/material 13 may be formed. The skilled person understands that other shapes are possible, e.g. a drop-shaped radome or a double cone-shaped radome. The important factor is that the radome is formed such that it leads condensate away by force of gravity. The radome 14 is in the preferred embodiment covering the whole of the plane surface 12, but could just as well cover only a part of the plane surface 12 if desired.

In another embodiment of the present invention, the radome 14 is a homogeneous filled e.g. cone, having the same mechanical strength and having the same good effect of leading condensate away as the preferred embodiment described above. This embodiment would be cheaper to manufacture, but with a little less thermally insulating characteristics than the preferred embodiment.

The electrical characteristics of the antenna 10 is designed, and the radiation of radar waves from the antenna 10 is optimised, in consideration of the radome 14 and the distance material 13. This means that the functionality of the antenna 10 is not effected or negligible effected by the inventive radome 14 and distance material 13. Therefore, the thickness of the radome 14 varies (not shown), and thus also the thickness of the material 13, as a function of the distance to a point (not shown), which in the preferred embodiment is defined where the center axes of the transmission line 11 crosses an imagined line horizontally aligned with the plane surface 12. This distance is henceforward called the radius of the radome. The variation of the thickness may be continuous or gradual. The variation of the thickness of the radome depends of course on the requirements of the electric characteristics and the radiation of radar waves, but just as an example would a thickness of 1 mm increase to 2 mm when the radius is decreased with half the length of the radius.

## Claims

1. A planar antenna (10) adapted to be used in a level gauging system using radar waves to gauge a level of a surface (3) of a fluid kept in a container (1), the antenna (10) being arranged above the fluid surface (3) and comprising:
a plane surface (12) adapted to face the fluid surface (3) and be substantially parallel with the fluid surface (3) and having means for transmitting radar waves towards the fluid surface and means for receiving reflected radar waves from the fluid surface in order to gauge the fluid level;
a radome (14) which at least partially covers the plane surface and shaped such that condensed fluid is directed away from the antenna (10) by force of gravity,
**characterized in that,**
a thermally insulating filling material (13) is provided between the radome (14) and the plane surface (12).

2. An antenna (10) according to claim 1, wherein the filling material (13) is arranged to provide a seal between the plane surface (12) and the radome (14) in order to prevent condensed fluid to enter between the radome (14) and the plane surface (12) in case of a leakage.

3. An antenna (10) according to claim 1, wherein the radome (14) is conically formed with the top of the cone (15) facing the fluid surface (3).

4. An antenna (10) according to claim 1, wherein the radome (14) has an envelope surface along which the thickness of the radome is variable in order to optimise the radiation of radar waves from the antenna (10).

5. An antenna (10) according to claim 1, wherein the radome (14) consist of a material of anti-static quality.

6. An antenna (10) according to claim 1, wherein the radome (14) consists of a polymeric material.

7. An antenna (10) according to claim 1, wherein a chemical resistant film provides the radome coating the filling material.

8. An antenna (10) according to claim 1, wherein the filling material (13) consists of the same material as the radome (14) and thus forms a homogeneous filled unit.

## Patentansprüche

1. Ebene Antenne (10), die zur Verwendung in einem Pegelmesssystem unter Verwendung von Radarwellen zum Messen eines Pegels einer Oberfläche (3) eines Fluids ausgelegt ist, die in einem Behälter (1) gehalten wird, wobei die Antenne (10) oberhalb der Fluidoberfläche (3) angeordnet ist und Folgendes umfasst:
eine ebene Fläche (12), die zum Anordnen gegenüber der Fluidoberfläche (3) ausgelegt ist und im Wesentlichen parallel zur Fluidoberfläche (3) ist und Mittel zum Senden von Radarwellen zur Fluidoberfläche hat und Mittel zum Empfangen von reflektierten Radarwellen von der Fluidoberfläche hat, um den Fluidpegel zu messen;
eine Radarkuppel (14), die zumindest teilweise die ebene Fläche bedeckt und so geformt ist, dass kondensiertes Fluid durch Schwerkraft weg von der Antenne (10) gelenkt wird,
**dadurch gekennzeichnet, dass**
ein thermisch isolierendes Füllmaterial (13) zwischen der Radarkuppel (14) und der ebenen Fläche (12) vorgesehen ist.

2. Antenne (10) nach Anspruch 1, wobei das Füllmaterial (13) so angeordnet ist, dass eine Dichtung zwischen der ebenen Fläche (12) und der Radarkuppel (14) vorgesehen ist, um zu verhindern, dass kondensiertes Fluid zwischen der Radarkuppel (14) und der ebenen Fläche (12) im Fall eines Lecks eintritt.

3. Antenne (10) nach Anspruch 1, wobei die Radarkuppel (14) konisch geformt ist, wobei die Spitze des Konus (15) der Fluidoberfläche (3) gegenüberliegt.

4. Antenne (10) nach Anspruch 1, wobei die Radarkuppel (14) eine Hüllfläche hat, entlang der die Dicke der Radarkuppel variabel ist, um die Strahlung von Radarwellen aus der Antenne (10) zu optimieren.

5. Antenne (10) nach Anspruch 1, wobei die Radarkuppel (14) aus einem Material mit Antistatikqualität besteht.

6. Antenne (10) nach Anspruch 1, wobei die Radarkuppel (14) aus einem Polymermaterial besteht.

7. Antenne (10) nach Anspruch 1, wobei ein chemisch beständiger Film die Radarkuppel mit einer Beschichtung für das Füllmaterial versorgt.

8. Antenne (10) nach Anspruch 1, wobei das Füllmaterial (13) aus demselben Material besteht wie die Radarkuppel (14) und so eine homogen gefüllte Einheit bildet.

## Revendications

1. Antenne plane (10) apte à être utilisée dans un système de jaugeage de niveau utilisant des ondes radar pour jauger un niveau d'une surface (3) d'un fluide contenu dans un récipient (1), l'antenne (10) étant agencée au-dessus de la surface de fluide (3) et comprenant :
une surface plane (12) apte à faire face à la surface de fluide (3) et à être sensiblement parallèle à la surface de fluide (3) et ayant des moyens pour transmettre des ondes radar vers la surface de fluide et des moyens pour recevoir des ondes radar réfléchies par la surface de fluide afin de jauger le niveau de fluide ;
un radôme (14) qui couvre au moins partiellement la surface plane et est façonné de sorte qu'un fluide condensé soit dirigé à l'écart de l'antenne (10) par la force de gravité,
**caractérisée en ce que**
un matériau de remplissage d'isolation thermique (13) est fourni entre le radôme (14) et la surface plane (12).

2. Antenne (10) selon la revendication 1, dans laquelle le matériau de remplissage (13) est agencé pour fournir un joint entre la surface plane (12) et le radôme (14) afin d'empêcher toute pénétration de fluide condensé entre le radôme (14) et la surface plane (12) en cas de fuite.

3. Antenne (10) selon la revendication 1, dans laquelle le radôme (14) est de forme conique avec le sommet du cône (15) qui fait face à la surface de fluide (3).

4. Antenne (10) selon la revendication 1, dans laquelle le radôme (14) a une surface d'enveloppe le long de laquelle l'épaisseur du radôme est variable pour optimiser le rayonnement des ondes radar provenant de l'antenne (10).

5. Antenne (10) selon la revendication 1, dans laquelle le radôme (14) se compose d'un matériau de qualité antistatique.

6. Antenne (10) selon la revendication 1, dans laquelle le radôme (14) se compose d'un matériau polymère.

7. Antenne (10) selon la revendication 1, dans laquelle un film à résistance chimique fournit au radôme le revêtement du matériau de remplissage.

8. Antenne (10) selon la revendication 1, dans laquelle le matériau de remplissage (13) se compose du même matériau que le radôme (14) et forme ainsi une unité remplie de manière homogène.
